# EUROPÄISCHE PATENTSCHRIFT

(11) **EP 1 072 075 B1**
(45) Veröffentlichungstag und Bekanntmachung des Hinweises auf die Patenterteilung: **06.02.2002**
(21) Anmeldenummer: 99945737.7
(22) Anmeldetag: 31.03.1999
(51) Int. Cl.: H02B 11/127

(54) **TRENNERKONTAKT-ANTRIEBSEINRICHTUNGEN FÜR SCHALTANLAGEN DER ENERGIEVERSORGUNG UND -VERTEILUNG**
DISCONNECTOR CONTACT DRIVE DEVICES FOR SWITCHING INSTALLATIONS WHICH SUPPLY AND DISTRIBUTE POWER
UNITES DE COMMANDE A CONTACTS DE RUPTURE POUR INSTALLATIONS DE COMMUTATION D'ALIMENTATION ET DE DISTRIBUTION D'ENERGIE

(30) Priorität: 17.04.1998 DE 19817939
(43) Veröffentlichungstag der Anmeldung: 31.01.2001
(73) Patentinhaber: SIEMENS AKTIENGESELLSCHAFT, 80333 München (DE)
(72) Erfinder: BÖTTCHER, Martin, D-10587 Berlin (DE); KAMPF, Marcus, D-12159 Berlin (DE)
(86) Internationale Anmeldenummer: DE9901061
(87) Internationale Veröffentlichungsnummer: WO9954974

(56) Entgegenhaltungen:
- DE-U- 1 650 165
- US-A- 4 427 854

## Beschreibung

Die Erfindung betrifft Trennerkontakt-Antriebseinrichtungen für Schaltanlagen der Energieversorgung und -verteilung, insbesondere für luftisolierte Mittelspannungs-Schaltanlagen, mit bewegbaren Poleinheiten, wobei in einem ersten Bewegungsablauf die Trennerkontakte von festen Gegenkontakten der Schaltanlagen getrennt werden und in einem zweiten Bewegungsablauf die Poleinheiten zum Erlangen der Isolierstrecke verschiebbar sind, wobei die Trennkontakte mit in x/y - Richtungen wirkenden Kraftkomponenten trennbewegt sind.

Trennerkontakt-Antriebseinrichtungen der eingangs definierten Art sind aus DE 196 33 522 A1 bekannt. Hier werden also zunächst in einem ersten Bewegungsablauf die Trennerkontakte aus dem Bereich der festen Gegenkcntakte der Schaltanlagen heraus bewegt, um anschließend in einem zweiten Bewegungsablauf die gesamten Poleinheiten soweit zu verschieben, daß die für die Personensicherheit erforderlichen Isolierstrecken erreicht sind.

Im Zusammenhang mit der Personensicherheit sind aber auch Schaltfelder bekannt, die zusätzliche Trennschalter aufweisen, deren Kontaktabstände die erforderlichen Isolierstrecken bilden.

Im Hinblick auf die Verfahrbarkeit der Poleinheiten sind darüber hinaus auch verfahrbare Einschübe mit Trennkontakten eingesetzt, wobei die Maße ihrer Verfahrbarkeit ebenfalls durch die erforderlichen Isolierstrecken vorgegeben sind.

Die der Erfindung zugrundeliegende Aufgabe besteht darin, eine Trennerkontakt-Antriebseinrichtung zu definieren, die mit minimalen Aufwand eine kompakte Bauform zuläßt, wobei jedoch die aufzuwendenden Antriebsenergien möglichst gering sind und über den gesamten Bewegungsablauf hinweg weitestgehend vergleichmäßigt auftreten.
Erfindungsgemäß wird dies durch die Merkmale
1.1 die Trennerkontakt-Antriebseinrichtungen sind mit geradlinigen Führungsachsen ausgestattet,
1.2 die Poleinheiten enthalten Polkastengestelle, die durch Krafteinwirkungen auf Kniehebel durch diese entlang den Führungsachsen jeweils von einem Stellungsanschlag EIN zu einem Stellungsanschlag AUS geradlinig verfahrbar sind,
1.3 die Kniehebel enthalten jeweils vier Drehlagerungen, wobei die erste Drehlagerung einer mit Schubantriebsachse gekoppelt ist, die zweite und dritte Drehlagerung Lagerungen des Kniehebels darstellen und die vierte Drehlagerung mit dem Polkastengestell verbunden ist,
1.4 die Schubantriebsachsen stehen über Umlenkgetriebe mit Drehantriebsachsen in Verbindung,
erreicht.

Die Polkastengestelle werden also mit den beweglichen Trennkontakten parallel zu den Führungsachsen zwischen den Schaltstellungen EIN und den Schaltstellungen AUS geradlinig verfahren. Die Trennerkontakt-Antriebseinrichtungen der Polkastengestelle, die als Viergelenke ausgeführte Kniehebel und den mit diesen zusammenwirkenden Schub- und Drehantriebsachsen aufweisen, sind praktisch durch ungleichförmig übersetzende Getriebe realisiert, die die Bewegungsabläufe der Polkastengestelle unter Einhaltung der erforderlichen Isolierstrecken in zwei Stufen auf kürzesten Wegen in den Schaltanlagen steuern.

Als wesentlich für die Erfindung ist in diesem Zusammenhang anzusehen, daß mit den ungleichförmig übersetzenden Getrieben die über die gesamten Bewegungsabläufe ungleichmäßig auftretenden Belastungen durch die besondere Ausgestaltung der Kniehebel mit ihren vier Kniehebel-Drehlagern im Zusammenwirken mit den Schub- und Drehantriebsachsen zu einer weitestgehend gleichmäßigen Belastung der Antriebe an sich führen.

Die in den Schaltstellungen EIN jeweils vollständig gestreckten Kniehebel bieten darüber hinaus eine für die Antriebe rückwirkungsfreie und symmetrisch wirkende Festlegung der Polkastengestelle im eingefahrenden Zustand. Durch die ungleichförmigen Übersetzungsverhältnisse werden die Polkastengestelle zu Beginn der Drehung der Antriebsachsen, praktisch im Bereich von ca. 15°, nicht bewegt, so daß in dieser Phase die Antriebe zur Steuerung von Hilfsschaltern verwendet werden können, um damit beispielsweise rechtzeitig Störsteilungsanzeigen auslösen zu können.
Die aus den Kniehebeln und den Schub- und Drehantriebsachsen gebildeten Getriebe dienen also gleichzeitig der Übertagung der jeweiligen Antriebsleistung, wobei diese Vorgänge in zwei aufeinanderfolgenden Schritten erfolgen.

Gemäß einer vorteilhaften Ausgestaltung der Erfindung ist das Merkmal
2.1 die um die dritte Drehlagerung beweglichen Teile der Kniehebel stehen jeweils mit einer Zugfeder derart in Eingriff, daß in dem Stellungsanschlag EIN und in dem Stellungsanschlag AUS die Kraft der Zugfeder wirksam ist.

Die Lagen der Polkastengestelle im eingefahrenden Zustand werden durch diese Maßnahme zusätzlich stabilisiert.
Die Zugfedern wirken darüber hinaus als Energiespeicher, die die bei Betätigung der Trennerkontakte erhöhten Antriebskräfte ohne Rückwirkung auf die eigentlichen Antriebe bereitstellen und somit zur weiteren Vereinheitlichung der Antriebsleistungen beitragen.

Eine weitere vorteilhafte Ausgestaltung der Erfindung sieht das Merkmal
3.1 die Drehantriebsachsen sind jeweils mit einem Antriebsmotor gekoppelt,
vor.
Damit können die Trennerkontakt-Antriebseinrichtungen durch Motore gesteuert werden.

Eine weitere vorteilhafte Ausgestaltung der Erfindung sieht das Merkmal
4.1 die Drehantriebsachsen sind durch manuell betätigbare Handkurbeln steuerbar,
vor.
Durch diese Maßnahme sind die Drehantriebsachsen unabhängig vom Netzzustand der Schaltanlagen steuerbar.

Eine weitere vorteilhafte Ausgestaltung der Erfindung sieht die Merkmale
5.1 die Drehantriebsachsen sind jeweils mit einem Antriebsmotor gekoppelt,
5.2 die Drehantriebsachsen sind durch manuell betätigbare Handkurbeln steuerbar,
vor.
Die Drehantriebsachsen können somit wahlweise durch die Antriebsmotore und durch die Handkurbeln angetrieben werden.

Die Erfindung wird durch ein figürlich dargestelltes Ausführungsbeispiel in vier Figuren näher erläutert, wobei zur besseren Übersicht im Ausführungsbeispiel nur die zum Verständnis notwendigen Bereiche teilweise auszugsweise abgebildet sind.

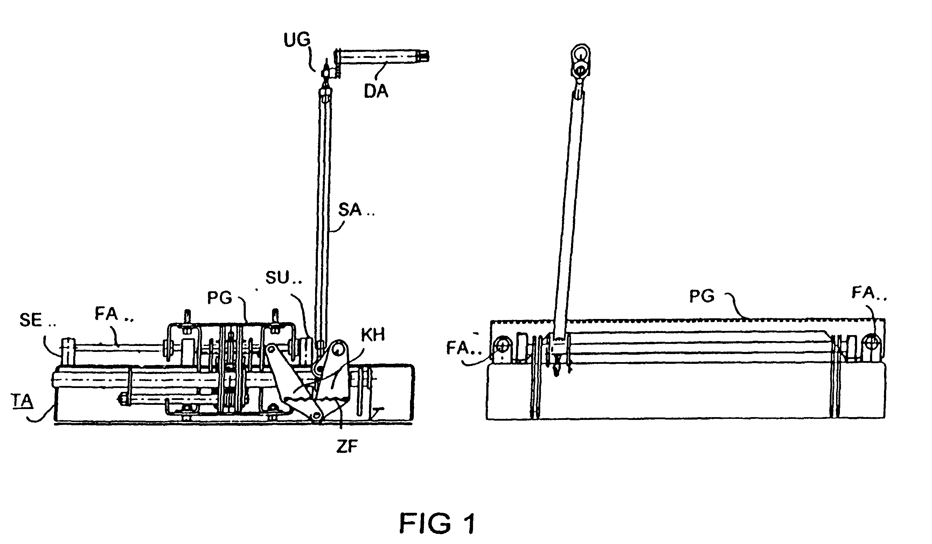

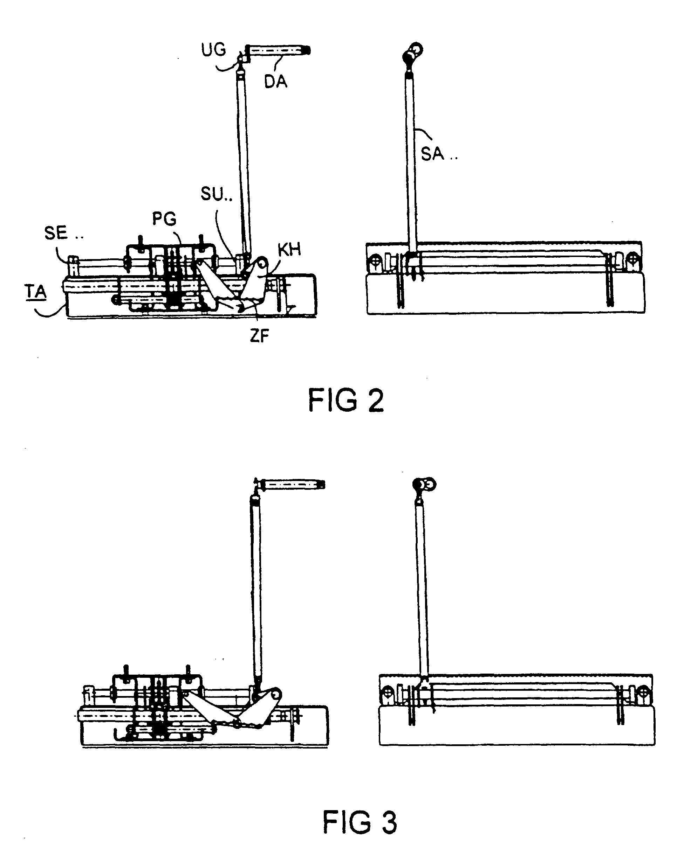

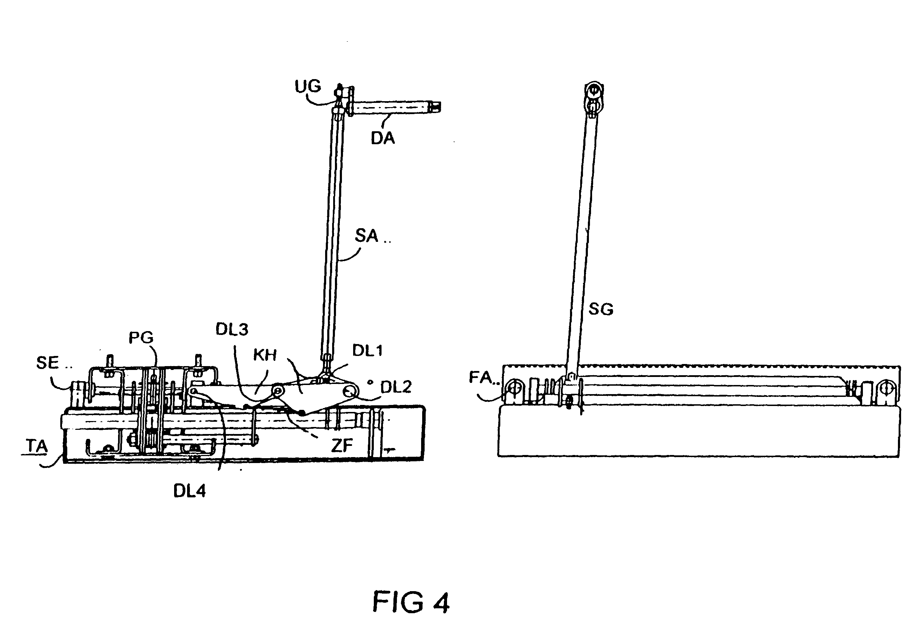

Im einzelnen zeigen die Figur 1 und die Figur 4 die Trennerkontakt-Antriebseinrichtung in der Schaltstellung AUS und in der Schaltstellung EIN im vergrößertem Maßstab, während durch die Figur 2 und durch die Figur 3 zwei weitere, dazwischen liegende Schaltstellungen der Trennerkontakt-Antriebseinrichtung im verkleinerten Maßstab dargestellt sind.

Die Figur 1 zeigt die Trennerkontakt-Antriebseirichtung TA links in der Seitenansicht und rechts daneben in der um 90° gedrehten hinteren Vorderansicht. Innerhalb der Trennerkontakt-Antriebseinrichtung TA sind in der Seitenansicht die zueinander parallel angeordneten Führungsachsen FA dargestellt, auf denen das Polkastengestell PG der nicht vollständig abgebildeten Poleinheit geradlinig in unterschiedliche Schaltstellungen zwischen dem Stellungsanschlag AUS und dem Stellungsanschlag EIN verfahrbar ist. Das Verfahren des Polkastengestells PG wird durch einen Kniehebel KH mit insgesamt vier Kniehebel-Drehlagern DL1, DL2, DL3, DL4 bewirkt, der seinerseits eine durch eine Schubantriebsachse SA, die über ein Umlenkgetriebe UG mit der Drehantriebsachse DA in Eingriff steht, schubgesteuert wird. Der Kniehebel KH ist durch das erste Kniehebel-Drehlager DL1 mit der Schubantriebsachse SA verbunden, während das zweite Kniehebel-Drehlager DL2 und das dritte Kniehebel-Drehlager DL3 ausschließlich Lagerungen des Kniehebels KH selbst sind und das vierte Kniehebel-Drehlager DL4 unmittelbar in Eingriff mit dem Polkastengestell PG steht.
Die hintere Vorderansicht rechts daneben zeigt die Schubantriebsachse SA. Weiterhin sind in dieser Darstellung die seitlich angeordneten Stellungsanschläge AUS mit SU.. bezeichnet, von denen das Polkastengestell PG aus in Richtung zu den daneben liegenden Stellungsanschlägen EIN, sichtbar ist in der linken Darstellung lediglich der vorne liegende Stellungsanschlag EIN SE.., in beiden Richtungen geradlinig verfahrbar ist.

In der Figur 2 und in der Figur 3, die die gleiche Trennerkontakt-Antriebseinrichtung im verkleinertem Maßstab abbilden, sind zur Verdeutlichung der kinematischen Abläufe wischen den Stellungsanschlägen EIN und AUS die Bezugszeichen der einzelnen Komponenten der Trennerkontakt-Antriebseinrichtung nicht eingetragen. Die Übergänge vom Schaltzustand der Figur 1 - die auf dem Polkastengestell PG nicht dargestellten Trennerkontakte stehen nicht in Eingriff mit den entsprechenden, ebenfalls nicht dargestellten Gegenkontakten - zu den Schaltzuständen der Figuren 2 und 3 lassen erkennen, daß mit der Drehung der Drehachse DA die Drehbewegung durch das Umlenkgetriebe UG in eine Hubbewegung umgesetzt wird, mit der die Schubantriebsachse SA relativ nach oben ausgelenkt sind. Dieser Bewegungsablauf der Schubantriebsachse SA führt zunächst dazu, daß der Kniehebel KH geringfügig aufgespreizt wird. Mit wachsender Hubbewegung bewirkt die Schubantriebsachse SA entgegen der Kraft der Zugfeder ZF, die die beweglichen Teile des dritten Kniehebel-Drehlagers KD3 aneinander zieht, ein weiteres Aufspreizten des Kniehebels KH, wodurch das Polkastengestell PG von seiner anfänglichen Ruhelage an den Stellungsanschlägen AUS in Richtung zu den Stellungsanschlägen EIN geschoben wird.

Mit der vollständig gepreizten Endstellung des Kniehebels KH, dargestellt in Figur 4, links, liegt das Polkastengestell PG mit seinen nicht dargestellten Trennkontakten an den Stellungsanschläge EIN an, was gleichbedeutend ist mit dem vollständigen Eingriff der beweglichen Trennerkontakte in die entsprechenden festen Gegenkontakten. Die Zugfeder ZF ist durch den gespreizten Kniehebel mit Zugkraft belastet, die beim Schließen der Trennkontakte diesen Vorgang als Energiespeicher vorteilhaft unterstützt.

Das Öffnen der Trennerkontakte erfolgt in entsprechender Weise durch die Hubauslenkung der Schubantriebsachse SA in entgegengesetzter Richtung. Hierbei wird der Kniehebel KH wieder in seine ursprüngliche Lage zurückgeführt, wobei das Öffnen der Trennkontakte zum Stellungsanschlag AUS hin durch den als Zugfeder ausgeführten Energiespeicher unterstützt wird.

Im Zusammenhang mit der Trennerkontakt-Antriebseinrichtung kann sowohl ein Motorantrieb als auch ein Handantrieb oder eine Kombination aus beiden Antriebsarten eingesetzt sein. Die Krafteinleitung erfolgt in beiden Fällen über die Drehantriebsachse DA.

## Patentansprüche

1. Trennerkontakt-Antriebseinrichtungen für Schaltanlagen der Energieversorgung und -verteilung, insbesondere für luftisolierte Mittelspannungs-Schaltanlagen, mit bewegbaren Poleinheiten, wobei in einem ersten Bewegungsablauf die Trennerkontakte von festen Gegenkontakten der Schaltanlagen getrennt werden und in einem zweiten Bewegungsablauf die Poleinheiten zur Erlangung der Isolierstrecke verschiebbar sind, wobei die Trennkontakte mit in x/y - Richtungen wirkenden Kraftkomponenten trennbewegt sind,
**gekennzeichnet durch** die Merkmale
1.1 die Trennerkontakt-Antriebseinrichtungen (TA) sind mit geradlinigen Führungsachsen (FA) ausgestattet,
1.2 die Poleinheiten enthalten Polkastengestelle (PG), die **durch** Krafteinwirkungen auf Kniehebel (KH) **durch** diese entlang den Führungsachsen (FA) jeweils von einem Stellungsanschlag EIN (SE...) zu einem Stellungsanschlag AUS (SU...) geradlinig verfahrbar sind,
1.3 die Kniehebel (KH) enthalten jeweils vier Drehlagerungen (DL1, DL2, DL3, DL4), wobei die erste Drehlagerung (DL1) mit einer Schubantriebsachse (SA) gekoppelt ist, die zweite und dritte Drehlagerung (DL2, DL3) Lagerungen des Kniehebels (KH) darstellen und die vierte Drehlagerung (DL4) mit dem Polkastengestell (PG) verbunden ist,
1.4 die Schubantriebsachsen (SA) stehen über Umlenkgetriebe (UG) mit Drehantriebsachsen (DA) in Verbindung.

2. Trennerkontakt-Antriebseinrichtungen für Schaltanlagen der Energieversorgung und -verteilung nach Patentanspruch 1, **gekennzeichnet durch** das Merkmal
2.1 die um die dritte Drehlagerung (DL3) beweglichen Teile der Kniehebel (KH) stehen jeweils mit einer Zugfeder (ZF) derart in Eingriff, daß in dem Stellungsanschlag EIN und in dem Stellungsanschlag AUS die Kraft der Zugfeder (ZF) wirksam ist.

3. Trennerkontakt-Antriebseinrichtungen für Schaltanlagen der Energieversorgung und -verteilung nach Patentanspruch 1 und den Patentansprüchen 1 und 2,
**gekennzeichnet durch** das Merkmal
3.1 die Drehantriebsachsen (DA) sind jeweils mit einem Antriebsmotor gekoppelt.

4. Trennerkontakt-Antriebseinrichtungen für Schaltanlagen der Energieversorgung und -verteilung nach Patentanspruch 1 und den Patentansprüchen 1 und 2,
**gekennzeichnet durch** das Merkmal
4.1 die Drehantriebsachsen (DA) sind **durch** manuell betätigbare Handkurbeln steuerbar.

5. Trennerkontakt-Antriebseinrichtungen für Schaltanlagen der Energieversorgung und -verteilung nach Patentanspruch 1 und den Patentansprüchen 1 und 2,
**gekennzeichnet durch** die Merkmale
5.1 die Drehantriebsachsen (DA) sind jeweils mit einem Antriebsmotor gekoppelt,
5.2 die Drehantriebsachsen (DA) sind **durch** manuell betätigbare Handkurbeln steuerbar.

## Claims

1. Disconnector contact drive devices for switchgear assemblies for power supply and distribution, in particular for air-insulated medium-voltage switchgear assemblies, having moving pole units, with the disconnector contacts being disconnected from fixed mating contacts in the switchgear assemblies in a first movement sequence, and the pole units being displaceable in order to lengthen the isolating gap in a second movement sequence, with the disconnection contacts being moved for disconnection by force components acting in the x/y directions,
**characterized by** the following features:
1.1 the disconnector contact drive devices (TA) are equipped with straight guide shafts (FA),
1.2 the pole units contain pole box frames (PG) which can each be moved rectilinearly by bell cranks (KH) along the guide shafts (FA) from an ON position stop (SE ...) to an OFF position stop (SU...) by forces acting on said bell cranks (KH),
1.3 the bell cranks (KH) each contain four rotary bearings (DL1, DL2, DL3, DL4), with the first rotary bearing (DL1) being coupled to a thrust drive shaft (SA), the second and third rotary bearings (DL2, DL3) representing bearings for the bell crank (KH), and the fourth rotary bearing (DL4) being connected to the pole box frame (PG), and
1.4 the thrust drive shafts (SA) are connected to the rotary drive shafts (DA) via direction-changing drives (UG).

2. Disconnector contact drive devices for switchgear assemblies for power supply and distribution according to Patent Claim 1,
**characterized by** the following feature:
2.1 the parts of the bell crank (KH) which move about the third rotary bearing (DL3) each engage with a tension spring (ZF) in such a manner that the force of the tension spring (ZF) acts at the ON position stop and at the OFF position stop.

3. Disconnector contact drive devices for switchgear assemblies for power supply and distribution according to Patent Claim 1 and Patent Claims 1 and 2,
**characterized by** the following feature:
3.1 the rotary drive shafts (DA) are each coupled to a drive motor.

4. Disconnector contact drive devices for switchgear assemblies for power supply and distribution according to Patent Claim 1 and Patent Claims 1 and 2,
**characterized by** the following feature:
4.1 the rotary drive shafts (DA) can be controlled by manually operable hand cranks.

5. Disconnector contact drive devices for switchgear assemblies for power supply and distribution according to Patent Claim 1 and Patent Claims 1 and 2,
**characterized by** the following features:
5.1 the rotary drive shafts (DA) are each coupled to a drive motor, and
5.2 the rotary drive shafts (DA) can be controlled by manually operable hand cranks.

## Revendications

1. Unités de commande à contacts de rupture pour des installations de commutation, d'alimentation et de distribution d'énergie, notamment pour des installations de commutation moyenne tension isolées par de l'air, ayant des unités polaires mobiles, les contacts de rupture étant dans un premier déroulement du mouvement séparés de contacts antagonistes fixes des installations de commutation et les unités polaires pouvant coulisser dans un second déroulement du mouvement pour atteindre la section d'isolement, les contacts de rupture étant déplacés par des composantes de force agissant dans des directions x/y,
**caractérisées par** les caractéristiques :
1.1 les unités (TA) de commande à contacts de rupture sont munies d'axes de guidage rectilignes ;
1.2 les unités polaires contiennent des bâtis (PV) de caisson de pôle, qui peuvent être déplacés en ligne droite par des applications de force sur leviers (KH) coudés par ceux-ci le long des axes de guidage respectivement d'une butée en position fermée (SE...) à une butée en position ouverte (SU...) ;
1.3 les leviers (KH) coudés comportent respectivement quatre paliers (DL1, DL2, DL2, DL4) toumants, le premier palier (DL1) tournant étant couplé à un axe (SA) de commande à déplacement linéaire, le deuxième et le troisième paliers (DL2, DL3) tournants représentant des paliers du levier (KH) coudé, le quatrième palier (DL4) tournant étant relié au bâti (PG) de caisson de pôle ;
1.4 les axes (SA) de commande à déplacement linéaire sont reliés à des axes (DA) de commande à mouvement de rotation par des transmissions (UG) de renvoi.

2. Unités de commande à contacts de rupture pour des installations de commutation, d'alimentation et de distribution d'énergie suivant la revendication 1, **caractérisées par** la caractéristique :
2.1 les parties de levier (KH) coudé qui sont mobiles autour du troisième palier (DL3) tournant, sont en prise respectivement avec un ressort (ZF) axial, de façon à ce que la force du ressort (ZF) de traction soit efficace dans la butée en position fermée et dans la butée en position ouverte.

3. Unités de commande à contacts de rupture pour des installations de commutation, d'alimentation et de distribution d'énergie suivant la revendication 1 et les revendications 1 et 2, **caractérisées par** la caractéristique :
3.1 les axes (DA) de commande en rotation sont couplés respectivement à un moteur d'entraînement.

4. Unités de commande à contacts de rupture pour des installations de commutation, d'alimentation et de distribution d'énergie suivant la revendication 1, et les revendications 1 et 2, **caractérisées par** la caractéristique :
4.1 les axes (DA) d'entraînement en rotation peuvent être commandés par des manivelles actionnées à la main.

5. Unités de commande à contacts de rupture pour des installations de commutation, d'alimentation et de distribution d'énergie suivant la revendication 1 et les revendications 1 et 2, **caractérisée par** les caractéristiques :
5.1 les axes (DA) d'entraînement en rotation sont couplés respectivement à un moteur d'entraînement ;
5.2 les axes (DA) d'entraînement en rotation peuvent être commandés par des manivelles pouvant être actionnées à la main.
